# EUROPÄISCHE PATENTSCHRIFT

(11) **EP 1 504 976 B1**
(45) Veröffentlichungstag und Bekanntmachung des Hinweises auf die Patenterteilung: **28.12.2005**
(21) Anmeldenummer: 04017793.3
(22) Anmeldetag: 28.07.2004
(51) Int. Cl.: B60T 15/20, B60T 15/60, B60T 13/26

(54) **Anhängerbremsventil für einen Kraftfahrzeug-Anhänger**
Trailer brake valve
Soupape de freinage pour un remorque

(30) Priorität: 05.08.2003 DE 10335717
(43) Veröffentlichungstag der Anmeldung: 09.02.2005
(73) Patentinhaber: Haldex Brake Products GmbH, 69123 Heidelberg (DE)
(72) Erfinder: Schell, Günter, 69181 Leimen (DE)
(74) Vertreter: Rehberg Hüppe + Partner

(56) Entgegenhaltungen:
- EP-A- 1 188 634
- DE-A- 2 322 419
- DE-A- 19 854 881
- GB-A- 1 411 981
- US-A- 2 772 926

## Beschreibung

Die Erfindung betrifft Anhängerbremsventil mit einem Gehäuse, das einen Eingangsanschluss für eine Vorratsleitung, einen Eingangsanschluss für eine Bremsleitung, einen Anschluss für einen Vorratsbehälter, einen Ausgangsanschluss für einen Bremssteuerdruck für Betriebsbremszylinder und einen Ausgangsanschluss für eine zu Federspeicherbremszylindern führende Löseleitung aufweist, mit einer Notbremseinrichtung, die eine Kolbenanordnung mit einem vom Druck im Vorratsbehälter beaufschlagten Schaltkolben und ein der Löseleitung zu den Federspeicherbremszylindem zugeordnetes Rückschlagventil aufweist und die bei druckloser Vorratsleitung den Vorratsbehälter mit dem Ausgangsanschluss für den Bremssteuerdruck verbindet. Solche Anhängerbremsventile werden bekanntlich auf Anhängern eingesetzt, wobei der Anhänger in der Regel mit Kombizylindern ausgestattet ist, die einen Federspeicherteil mit Lösekammer und Speicherfeder und einen Betriebsbremsteil mit Bremskammer aufweisen.

### STAND DER TECHNIK

Aus der DE 22 52 482 A1 ist ein Anhängerbremsventil der eingangs beschriebenen Art bekannt. Das Anhängerbremsventil weist in einem Gehäuse einen Schaltkolben auf, der Bestandteil einer Notbremseinrichtung ist. Der Schaltkolben als Bestandteil der Notbremseinrichtung ist hier nicht als Relaiskolben ausgebildet. Die Absicherung des Vorratsdruckes in einem Vorratsbehälter auf dem Anhänger erfolgt über ein Rückschlagventil in der Vorratsleitung. Bei druckloser Vorratsleitung verbindet der Schaltkolben den Vorratsbehälter mit einem Ausgangsanschluss für den Bremssteuerdruck. In der Löseleitung zu den Federspeicherbremszylindern ist ein weiteres Rückschlagventil angeordnet. Dieses Rückschlagventil ist erforderlich, um den Lösedruck in der Lösekammer des Federspeicherteils aufrechtzuerhalten, damit bei auftretenden Druckschwankungen im Vorratsbehälter, die durch normale Bremsvorgänge verursacht worden sind, eine zusätzlich eintretende Bremswirkung über den Federspeicherteil vermieden wird. Das in der zur Lösekammer der Federspeicherbremse angeordnete Rückschlagventil weist eine auf einer Feder abgestützte Platte auf, die ihrerseits in einem Kolben gelagert ist, der ebenfalls auf einer Feder abgestützt ist. Es handelt sich um ein abhängig vom Druck gesteuertes Rückschlagventil, d. h. das Rückschlagventil öffnet erst nach einem Druckabfall definierter Größe im Vorratsbehälter. In abgestelltem abgekuppeltem Zustand des Anhängers ist bekanntlich die Vorratsleitung entlüftet. Es tritt dadurch die Notbremsstellung ein, indem der Druck im Vorratsbehälter über die Steuerleitung zu dem Relaisventil ausgesteuert wird. In der Folge tritt eine Bremswirkung über die Betriebsbremszylinder ein. Wenn in einem solchen Falle der Vorratsbehälter schleichend Luft verliert, nimmt die Bremswirkung in den Betriebsbremszylindern entsprechend ab, ohne dass eine unterstützende Wirkung durch die Federspeicherbremszylinder eintritt. Die verbleibende Bremskraft kann geringer werden als die Bremskraft, die ausreicht, um den Anhänger in abgekuppeltem abgestelltem Zustand zu halten. Erst wenn der Druck im Vorratsbehälter weiter abgesunken ist, also eine Druckabfallschwelle überschritten worden ist, öffnet das druckgesteuerte Rückschlagventil in der zu der Lösekammer der Federspeicherbremszylinder führenden Löseleitung und es entsteht eine Verbindung zwischen dem Vorratsbehälter und der Lösekammer des Federspeicherbremsteils. Dann sinkt der Druck gemeinsam weiter ab. Je nach dem, wo der Einschaltdruck der Federspeicherbremse liegt, wird der Federspeicher aktiviert. Der Anhänger könnte in der Zwischenzeit weggerollt sein. Er wird aber dann, also nach einer Druckerniedrigung im Vorratsbehälter, bei der der untere Druck der Druckabfallschwelle unterschritten ist, durch die Federspeicherbremse festgebremst. Mit diesen Unsicherheiten ist die Anlage des Anhängerbremsventils belastet. Die bekannte Anlage schweigt zu der Möglichkeit der Anordnung eines manuell betätigbaren Parkventils und/oder eines Rangierventils sowie zu den damit verbundenen Problemen, die sich aus dem Betätigen oder Nicht-Betätigen (Vergessen) des Parkventils ergeben.

Ein weiteres Anhängerbremsventil ist aus der EP 1 188 634 A2 bekannt. Das Anhängerbremsventil besitzt ein Gehäuse mit den üblichen Anschlüssen für die Bremsleitung, die Vorratsleitung, einen ausgesteuerten Bremssteuerdruck zum Ansprechen von Betriebsbremszylindern, entweder direkt oder über einen Druckmodulator beeinflusst. Es ist auch ein Anschluss für einen Vorratsbehälter für Druckluft auf dem Anhänger vorgesehen. Schließlich ist das Anhängerbremsventil auch für eine solche Bremsanlage bestimmt, die zusätzlich zu den Betriebsbremszylindern über Federspeicherbremszylinder verfügt, die über eine Löseleitung gelöst gehalten werden. Das Anhängerbremsventil weist in seinem Gehäuse lediglich eine Notbremseinrichtung auf und verzichtet damit auf die Anordnung eines Relaiskolbens. Die Notbremseinrichtung verbindet bei druckloser Vorratsleitung den Vorratsbehälter mit dem Ausgangsanschluss für den Bremssteuerdruck in die Betriebsbremszylinder. Die Notbremseinrichtung weist eine Kolbenanordnung mit einem vom Druck im Vorratsbehälter beaufschlagten Schaltkolben auf. Weiterhin ist im Anhängerbremsventil ein Rückschlagventil vorgesehen, welches der Löseleitung zu den Federspeicherbremszylindern zugeordnet ist. Es versteht sich, dass die Befüllung und Absicherung des Vorratsbehälters über ein zweites Rückschlagventil erfolgt, welches häufig als überströmbare Lippenmanschette ausgebildet ist. Ein solches Anhängerbremsventil auf dem Anhänger kann zusammen mit einer Bremsanlage auf dem Motorfahrzeug betrieben werden, die ganz verschieden ausgebildet sein kann, angefangen von einer einfachen mechanisch-pneumatischen Bremsanlage bis hin zu einer wesentliche elektronische Elemente aufweisenden Bremsanlage mit ABS- und/oder EBS-Regelung. Es ist bekannt, dass in Verbindung damit einsetzbare Anhängerbremsventile keinen Relaiskolben aufweisen müssen und daher kostengünstiger herstellbar sind. Um bei einem geparkten Anhängefahrzeug eine erhöhte Sicherheit gegen ein unbeabsichtigtes Anrollen zu erhalten, ist bei druckloser Vorratsleitung die Wirkung des Rückschlagventils aufgehoben, indem ein Bypasskanal, der das Rückschlagventil überbrückt, in der Notbremsstellung des Schaltkolbens des Anhängerbremsventils zur Verfügung gestellt wird. Dieser Bypasskanal erfordert die Herstellung entsprechender Bohrungen bzw. Querschnitte im Anhängerbremsventil. Wenn der Schaltkolben in Schieberart ausgebildet wird, befindet sich das Dichtelement des Rückschlagventils in der Notbremsstellung außer Anlage an der zugehörigen Gehäusebohrung, so dass eine entsprechende Durchmesseraufweitung den Bypasskanal bilden kann. Der Schieber des Schaltkolbens muss dabei eine große Anzahl von Dichtelementen aufnehmen, erlangt eine relativ lange Bauart und erfordert damit ein entsprechend groß gestaltetes Gehäuse des Anhängerbremsventils. Die Achse des Schaltkolbens und die Achse des Rückschlagventils sind dabei auch hier fluchtend zueinander angeordnet.

Die grundsätzliche Bauart eines Anhängerbremsventils ohne Relaiskolben, jedoch mit einem Schaltkolben als Bestandteil der Notbremseinrichtung ist aus der DE 31 44 027 A1 bekannt.

Bei druckbeaufschlagter gekuppelter Vorratsleitung ist auch der Anschluss für die Bremsleitung direkt mit dem Ausgangsanschluss für den Bremssteuerdruck verbunden.

### AUFGABE DER ERFINDUNG

Der Erfindung liegt die Aufgabe zugrunde, ein Anhängerbremsventil der eingangs beschriebenen Art bereitzustellen, welches vergleichsweise verlässlicher arbeitet als die bekannten Anhängerbremsventile. Bei abgekuppelter Vorratsleitung oder Auftreten eines Lecks in der Vorratsleitung soll die Notbremsfunktion erreicht werden, bei der durch Schalten des Schaltkolbens der Druck im Vorratsbehälter auf die Betriebsbremszylinder zur Einwirkung gebracht wird, und zwar mit und ohne Zwischenschaltung eines Relaisventils. Bei abgekuppeltem abgestelltem Anhänger soll sichergestellt werden, dass auch bei einem z.B. schleichenden Druckverlust im Vorratsbehälter, der geringer als der Druckabfall der Schwelle im Stand der Technik ist, eine möglichst unverzügliche Aktivierung der Federspeicherbremse erreicht wird, die freilich noch abhängig von dem Lösedruck des Federspeicherteils ist.

### LÖSUNG

Erfindungsgemäß wird dies dadurch erreicht, dass das Rückschlagventil als Weg-gesteuertes Rückschlagventil ausgebildet ist.

### BESCHREIBUNG DER ERFINDUNG

Das Weg-gesteuerte Rückschlagventil ist dabei vorzugsweise innerhalb des Anhängerbremsventils so angeordnet, dass es abhängig von einer mechanischen Schaltbewegung des Schaltkolbens, also abhängig von der Zurücklegung eines Weges des Schaltkolbens, zwangsläufig und unverzüglich in die Offenstellung überführt wird, wenn der Schaltkolben seine Schaltbewegung zum Erreichen der Notbremsfunktion ausführt. Die Signalgewinnung und/oder -übertragung kann rein mechanisch, pneumatisch, elektrisch o. dgl. erfolgen, Mit dem zwangsläufig über den Weg des Schaltkolbens in die Offenstellung überführten gesteuerten Rückschlagventil wird einerseits eine direkte Verbindung zwischen dem Vorratsbehälter und der Lösekammer des Speicherteils des Federspeicherbremszylinders erreicht. Andererseits ist der Vorratsbehälter entweder direkt oder über Relaiswirkung auch mit der Bremskammer des Betriebsbremsteils verbunden. Insoweit wird ein Kurzschluss erreicht. Damit wirkt sich sofort jeder weitere Druckverlust im Vorratsbehälter, auch infolge einer schleichenden Undichtigkeit, in der Lösekammer des Federspeicherbremszylinders und in der Bremskammer des Betriebsbremsteils aus. Mit einem Druckverlust im Vorratsbehälter sinkt die über die Bremskammer des Betriebsbremsteils ausgeübte Bremswirkung, während gleichzeitig die über die Entlüftung der Lösekammer des Federspeicherteils ausgeübte Bremswirkung ansteigt.

Die Erfindung kann unabhängig davon angewendet und eingesetzt werden, ob der Schaltkolben des Anhängerbremsventils als einfacher Schaltkolben oder in Relaisbauart verwirklicht ist. Besonders sinnvoll ist es, die vorliegende Erfindung in Verbindung mit Federspeicherbremszylindern einzusetzen, die einen relativ hohen Lösedruck besitzen, der so festgelegt ist, dass er innerhalb der Druckschwankungen liegt, die durch das Arbeiten des Kompressors und durchgeführte Bremsungen im Vorratsbehälter auftreten.

Gemäß den Vorschriften der Berufsgenossenschaft für Fahrzeughaltungen soll das Ankuppeln eines Anhängers an einem Zugfahrzeug in der Reihenfolge erfolgen, dass zunächst der Kupplungskopf Bremse gekuppelt, also die Bremsleitung angeschlossen wird. Erst anschließend soll der Kupplungskopf Vorrat, also die Vorratsleitung angeschlossen werden. Beim Abkuppeln soll die umgekehrte Reihenfolge eingehalten werden, also zunächst die Vorratsleitung entkuppelt und erst anschließend die Bremsleitung entkuppelt werden. Wenn man sich an diese Vorschriften hält, ergibt sich bei Ausführungen des neuen Anhängerbremsventils ohne Relaiskolben der besondere Vorteil, dass der Anhänger durch die Betätigung der jeweils ersten Leitung sicher festgebremst wird. Beim alleinigen Ankuppeln der Bremsleitung ist damit sichergestellt, dass das Anhängefahrzeug durch den vom Zugfahrzeug ausgesteuerten Bremsdruck pneumatisch gebremst wird, z. B. durch die im Zugfahrzeug betätigte Parkbremse. Beim Ankuppeln der Bremsleitung wird auch ein vorher leerer Druckluftbehälter auf dem Anhänger aufgefüllt. In der Folge stellt sich eine Bremswirkung über die Betriebsbremse auf dem Anhänger ein. Damit ist das Anhängefahrzeug bereits über die Betriebsbremse eingebremst, bevor die Vorratsleitung angeschlossen wird. Beim alleinigen Entkuppeln der Vorratsleitung tritt die Notbremsfunktion des Anhängerbremsventils in Wirkung, unabhängig davon, ob das Anhängerbremsventil einen Relaiskolben aufweist oder nicht.

In einer bevorzugten Ausführungsform weist das Weg-gesteuerte Rückschlagventil in der Löseleitung einen auf einer Schließfeder in Schließrichtung abgestützten Ventilkörper auf, der mit dem Schaltkolben in der Weise zusammenarbeitet, dass der Ventilkörper des Rückschlagventils durch Entlüftung der Vorratsleitung durch direkten mechanischen Kontakt mit dem Schaltkolben in die Offenstellung überführt wird. Wenn dagegen die Vorratsleitung unter Druck steht, befindet sich der Schaltkolben in seiner anderen Endstellung, die durch einen Anschlag gesichert ist. In dieser Stellung besteht Verbindung von der Bremsleitung in Richtung auf die Bremskammer des Betriebsbremsteils. Das Rückschlagventil in der Löseleitung ist geschlossen.

Besonders sinnvoll ist es, wenn der Schaltkolben mit seiner Achse und der Ventilkörper des Rückschlagventils mit seiner Achse im rechten Winkel zueinander angeordnet sind. Es ergibt sich dann in konstruktiv einfacher Weise die Möglichkeit, den Ventilkörper des Rückschlagventils mit einem sich axial erstreckenden Fortsatz auszubilden, der in den Weg des Schaltkolbens einragt, so dass die Steuerung des Rückschlagventils nicht nur abhängig von dem Zurücklegen eines Weges des Schaltkolbens erfolgt, sondern auch die Signalübertragung auf rein mechanischem Wege verlässlich erreicht wird. Zum gesteuerten Öffnen des Weg-gesteuerten Rückschlagventils kann am Schaltkolben eine Schrägfläche oder ein axial wirkender Anschlag vorgesehen sein, der mit dem Fortsatz des Ventilkörpers des Rückschlagventils zusammenarbeitet. Der Ventilkörper des Rückschlagventils kann axial geführt sein. Es ist aber auch möglich, dass das gesteuerte Rückschlagventil als Kippventil ausgebildet ist.

Sofern in der zu den Federspeicherbremszylindem führenden Löseleitung ein manuell betätigbares Parkventil vorgesehen ist, ergibt sich für den Benutzer die Möglichkeit, die Lösekammern der Federspeicherbremszylinder manuell zu entlüften und damit die Federspeicherbremse zu aktivieren. Zu einer ordnungsgemäßen Betätigung gehört es deshalb normalerweise, bei einem abgekuppeltem abgestellten Anhänger die Lösekammern zu entlüften und damit die Federspeicherbremse einzulegen. Selbst aber wenn diese manuelle Betätigung vergessen wird, ermöglicht es das geöffnete Rückschlagventil, die Federspeicherbremse bei einem entsprechenden Druckabfall im Vorratsbehälter zu aktivieren.

In dem Schaltkolben kann ein Doppelventilkörper federnd aufgehängt sein. Dies gilt sowohl bei einer Ausbildung der Notbremseinrichtung mit Relaiskolben als auch ohne. In beiden Fällen ist der Doppelventilkörper federnd in dem Schaltkolben aufgehängt.

In der zu dem Schaltkolben führenden Vorratsleitung kann ein manuell betätigbares Rangierventil vorgesehen sein. Dieses Rangierventil wird beim Befüllen über die Vorratsleitung automatisch in die Ausgangsstellung zurückgeführt bzw. in dieser Stellung gehalten. In abgekuppeltem Zustand des Anhängers mit entlüfteter Vorratsleitung gestattet es die manuelle Betätigung des Rangierventils, die Federspeicherbremse zum Zwecke des Rangierens zu lösen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt einen schematisierten Vertikalschnitt durch eine erste Ausführungsform des Anhängerbremsventils mit den angeschlossenen Elementen in der Stellung, die sie drucklos bei abgekuppeltem Anhänger einnehmen.
- **Fig. 2**: zeigt das Anhängerbremsventil gemäß Fig. 1 in der Relativstellung der Teile, die diese während der Fahrt bei gekuppeltem Anhänger einnehmen.
- **Fig. 3**: zeigt eine zweite Ausführungsform des Anhängerbremsventils mit Relaiskolben in drucklosem abgekuppeltem Zustand des Anhängers.
- **Fig. 4**: zeigt das Anhängerbremsventil gemäß Fig. 3 während der Fahrt.
- **Fig. 5**: zeigt eine dritte Ausführungsform des Anhängerbremsventils in drucklosem abgekuppeltem Zustand des Anhängers.
- **Fig. 6**: zeigt das Anhängerbremsventil gemäß Fig. 5 während der Fahrt.

### FIGURENBESCHREIBUNG

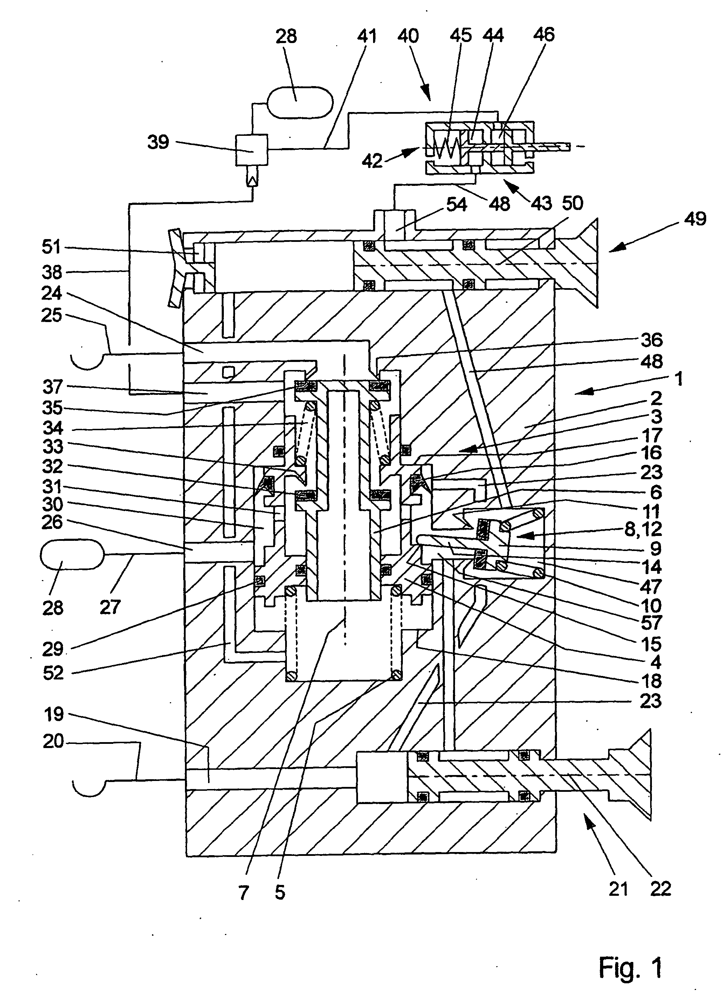

Fig. 1 zeigt eine erste Ausführungsform des Anhängerbremsventils 1 mit einem schematisch wiedergegebenen Gehäuse 2. Im Gehäuse 2 befindet sich eine Notbremseinrichtung 3 mit einem Schaltkolben 4, der auf einer Feder 5 abgestützt ist. In dem Schaltkolben 4 ist in der dargestellten Weise ein Doppelventilkörper 6 federnd aufgehängt und gedichtet geführt. Der Schaltkolben 4 und der Doppelventilkörper 6 besitzen eine gemeinsame Achse 7.

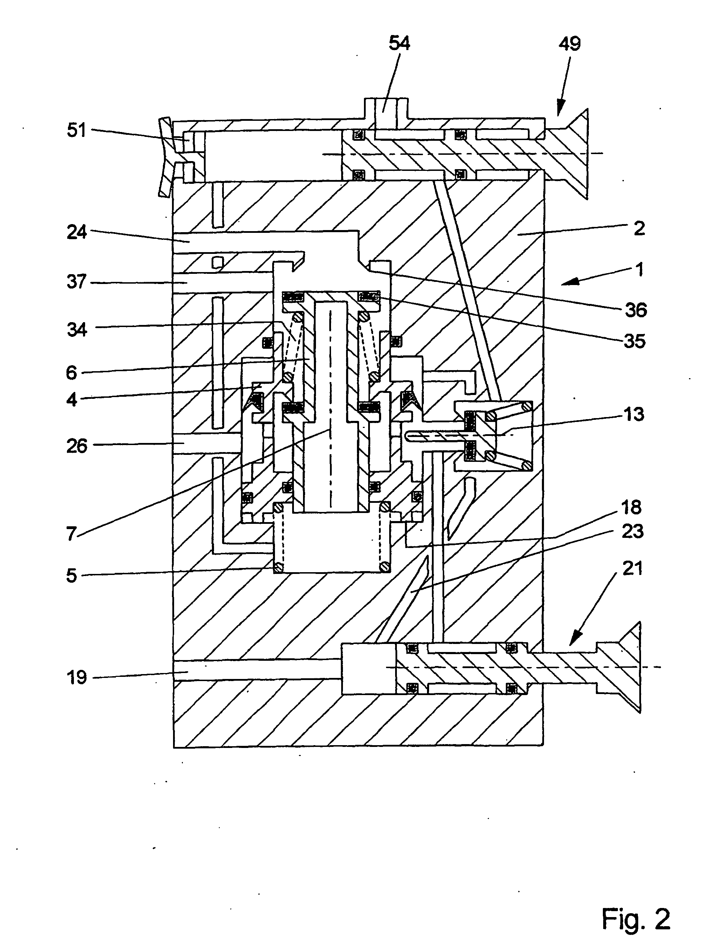

Dem Schaltkolben 4 ist ein Weg-gesteuertes Rückschlagventil 8 zugeordnet, welches einen Ventilkörper 9 aufweist, der von einer Schließfeder 10 in die Schließstellung beaufschlagt ist. Der Ventilkörper 9 bildet mit einem eingezogenen Rand 11 im Gehäuse 1 ein Schließventil. Das Rückschlag 8 ist hier als Kippventil 12 ausgebildet. Das Rückschlagventil 8 bzw. dessen Ventilkörper 9 weist eine Achse 13 auf (Fig. 2), die in der Schließstellung des Rückschlagventils 8 einen rechten Winkel zu der Achse 7 des Schaltkolbens 4 einnimmt. Der Ventilkörper 9 des Rückschlagventils 8 ist mit einem Fortsatz 14 versehen, der in den Weg des Schaltkolbens einragt und mit einem dort vorgesehenen Anschlag 15 zusammenarbeitet.

Der Schaltkolben 4 trägt eine Überströmmanschette 16, eine Lippendichtung oder dergleichen, die ein weiteres Rückschlagventil für Vorratsluft darstellt. Der hülsenartig ausgebildete Schaltkolben 4 wird in drucklosem Zustand von der Feder 5 an einen gehäusefesten Anschlag 17 gedrückt, der den Weg des Schaltkolbens 4 nach oben begrenzt. Der Schaltkolben 4 nimmt diese Stellung bei entlüfteter Vorratsleitung ein. Im Gehäuse ist ein weiterer Anschlag 18 gebildet, der den Hub bzw. Weg des Schaltkolbens 4 nach unten begrenzt. Der Schaltkolben 4 liegt an diesem Anschlag 18 an, wenn der Vorratsbehälter ordnungsgemäß befüllt ist (Fig. 2).

Am Gehäuse 2 ist ein Eingangsanschluss 19 für eine Vorratsleitung 20 vorgesehen. Die Vorratsleitung 20 führt zu einem Rangierventil 21 mit manuell und pneumatisch verschiebbarem Schieber 22. Die Vorratsleitung 20 setzt sich innerhalb des Gehäuses 2 in einer Leitung 23 fort. Fig. 1 zeigt den drucklosen Zustand, wobei die Vorratsleitung 20 und die Leitung 23 bis oberhalb der Überströmmanschette 16 an die Atmosphäre angeschlossen, also entlüftet sind.

Am Gehäuse 2 ist ein Eingangsanschluss 24 für die Bremsleitung 25 vorgesehen, die drucklos ebenfalls entlüftet ist. Ein Anschluss 26 führt über eine Leitung 27 zu einem Vorratsbehälter 28 für Druckluft auf dem Anhänger.

Der Schaltkolben 4 besitzt eine Dichtung 29, die eine zwischen Gehäuse 2 und Schaltkolben 4 gebildete Vorratskammer 30 abschließt. Die Vorratskammer 30 steht in dauernder Verbindung zu dem Vorratsbehälter 28 und wird weiter durch die Überströmmanschette 16 begrenzt. Die Vorratskammer 30 erstreckt sich auch über mindestens eine radiale Durchbrechung 31 bis in den Innenraum zwischen dem Schaltkolben 4 und dem Doppelventilkörper 6. Der Doppelventilkörper besitzt eine Ventilplatte 32, die mit einem eingezogenen Rand 33 am Schaltkolben 4 ein Durchlassventil 32, 33 bildet. In Schließzustand des Durchlassventils (Fig. 2) wird damit die Vorratskammer 30 abgeschlossen. Dieses Durchlassventil 32, 33 begrenzt andererseits eine Bremskammer 34, die im Gehäuse 2 zwischen dem Doppelventilkörper 6 und einer Gehäusebohrung, in der der Schaltkolben 4 gelagert ist, gebildet wird. Auch der Doppelventilkörper 6 weist ein Dichtelement 35 auf, welches mit einem gehäuseseitigen Rand 36 ein Durchlassventil 35, 36 zwischen der Bremsleitung 25 und einem Ausgangsanschluss 37 bildet, an den eine Steuerleitung 38 angeschlossen ist, die entweder direkt oder über ein Relaisventil 39, ein EBS-Ventil oder dergleichen zu einem oder mehreren Kombizylindem 40 der Bremse des Anhängers führt. Das Relaisventil 39 wird ebenfalls mit Vorratsluft aus dem Vorratsbehälter 28 versorgt. Es versteht sich, dass auf einem Anhänger in der Regel mehrere Kombizylinder 40 vorgesehen sind, von denen hier der Einfachheit halber nur einer dargestellt ist. Von dem Relaisventil 39 führt eine Leitung 41 zu dem oder den Kombizylindern 40. Jeder Kombizylinder 40 besitzt einen Federspeicherteil 42 und einen Betriebsbremsteil 43. Der Federspeicherteil 42 weist eine Lösekammer 44 und eine Speicherfeder 45 auf. Der Betriebsbremsteil 43 weist einen Betriebsbremszylinder 46 auf, zu dem die Leitung 41 herangeführt ist.

Die Schließfeder 10 des Rückschlagventils 8 ist in einem Federraum 47 angeordnet, von dem eine Löseleitung 48 über ein Parkventil 49 bis zur Lösekammer 44 des Federspeicherteils 42 führt. Das Parkventil 49 weist einen manuell verschiebbaren Schieber 50 auf, ist in der dargestellten Weise ausgebildet und verschiebbar und besitzt einen eigenen Entlüftungsanschluss 51, der zur Atmosphäre führt. In der eingeschobenen Stellung des Schiebers 50 des Parkventils 49 ist die Lösekammer 44 über die Löseleitung 48 mit dem Federraum 47 verbunden. In der herausgezogenen Stellung ist dagegen die Lösekammer 44 entlüftet, so dass die Speicherfeder 45 die Federspeicherbremse aktivieren kann.

Der Raum unterhalb des Schaltkolbens 4, in dem die Feder 5 angeordnet ist, ist über eine Entlüftungsleitung 52 dauernd an die Atmosphäre angeschlossen, also entlüftet.

Fig. 1 zeigt die Stellung der Teile des Anhängerbremsventils 1 in drucklosem Zustand bei abgekuppeltem Anhänger. Dies bedeutet, dass sowohl die Vorratsleitung 20 wie auch die Bremsleitung 25 entlüftet sind. Die Feder 5 hält den Schaltkolben 4 an dem Anschlag 17. Der Doppelventilkörper 6 hat sich mit seinem Dichtelement 35 an den Rand 36 angelegt, so dass das Durchlassventil 35, 36 zwischen der Bremsleitung 25 und der Steuerleitung 38 geschlossen ist. Die Steuerleitung 38 ist an die Vorratskammer 30 und damit den Vorratsbehälter 28 über das geöffnete Durchlassventil 32, 33 zwischen der Ventilplatte 32 und dem Rand 33 an die Steuerleitung 38 angeschlossen. Andererseits ist die Vorratskammer 30 bei geöffnetem Rückschlagventil 8 auch an die Löseleitung 48 und damit an die Lösekammer 44 angeschlossen. Es besteht ein Kurzschluss zwischen diesen Leitungsverbindungen. Sofern der Vorratsbehälter 28 mit Druckluft ordnungsgemäß aufgefüllt war, befindet sich dieser Druck auch in der Lösekammer 44 des Federspeicherteils 42, so dass die Federspeicherbremse gelöst ist. Gleichzeitig ist der Betriebsbremszylinder 46 über das Relaisventil 39 belüftet, so dass der Anhänger durch die Betriebsbremse festgebremst ist. Durch Ziehen des Schiebers 50 des Parkventils 49 kann die Lösekammer 44 entlüftet und damit die Federspeicherbremse aktiviert werden.

Wird beim pneumatischen Ankuppeln zunächst die Bremsleitung verbunden, wie es der Empfehlung der Berufsgenossenschaft entspricht, dann gelangt Druckluft über die Bremsleitung, das sich öffnende Durchlassventil 35, 36 einerseits in die Steuerleitung 38 zum Relaisventil 39 und zum anderen durch das offenstehende Durchlassventil 32, 33 auch in den möglicherweise leeren oder teilentleerten Vorratsbehälter 28, der entsprechend aufgefüllt wird. In der Folge ergibt sich eine Festbremsung des Anhängers über eine Beaufschlagung des Betriebsbremszylinders 46 zusätzlich zu der möglicherweise noch teilwirksamen Notbremsfunktion.

Fig. 2 zeigt die Stellung der Teile des Anhängerbremsventils 1 im Fahrzustand, also mit mechanisch gekuppeltem Anhänger und verbundener Vorratsleitung 20 wie auch verbundener Bremsleitung 25. Beim Verbinden der Vorratsleitung 20 mit dem entsprechenden Kupplungskopf des Zugfahrzeugs gelangt Druckluft über die Vorratsleitung 20 und die Leitung 23 in den Raum oberhalb der Überströmmanschette 16 des Schaltkolbens 4. Diese Druckluft fließt über die Überströmmanschette 16 in die Vorratskammer 30 ein und der Schaltkolben 4 wird gegen die Kraft der Feder 5 an seinen Anschlag 18 verschoben, wie dies Fig. 2 zeigt. Damit wird das Durchlassventil 32, 33 zwischen Schaltkolben 4 und Doppelventilkörper 6 geschlossen und das Durchlassventil 35, 36 geöffnet. Die Steuerleitung 38 ist über die entlüftete Bremsleitung 25 entlüftet, während gleichzeitig der Vorratsbehälter 28 mit Vorratsdruck aufgefüllt wird, bis das vorgesehene Druckniveau erreicht ist. Infolge der Abwärtsbewegung des Schaltkolbens 4 hat auch das Rückschlagventil 8 geschlossen, wobei die Lösekammer 44 unter Druck gesetzt wurde, also die Federspeicherbremse gelöst wurde. Es ist die Stellung gemäß Fig. 2 erreicht und der Anhänger befindet sich in fahrbereitem Zustand.

Eine während der Fahrt eingeleitete Bremsung über die Bremsleitung 25 führt dazu, dass Bremssteuerluft über die Steuerleitung 38 zu dem Relaisventil 39 geführt wird. Entsprechend der Relaisfunktion gelangt Druckluft aus dem Vorratsbehälter 28 über die Leitung 41 in die Betriebsbremszylinder 46, so dass der Anhänger entsprechend der Betätigung der Betriebsbremse des Zugfahrzeugs gebremst wird.

Sollte die Vorratsleitung 20 abreißen oder in der Vorratsleitung 20 ein entsprechendes Leck entstehen, tritt die Notbremseinrichtung 3 in Aktion. Die Entlüftung der Vorratsleitung 20 und der Leitung 23 führt dazu, dass der Schaltkolben 4 auf seiner Oberseite druckentlastet wird, so dass die Feder 5 nunmehr in der Lage ist, einen Hub bzw. Weg nach oben zurückzulegen, bis die Stellung gemäß Fig. 1 erreicht ist. Durch den Anschlag 15, der in Kontakt zu dem Fortsatz 14 des Rückschlagventils 8 kommt, wird das Rückschlagventil 8 geöffnet, so dass ein Kurzschluss zwischen der Lösekammer 44 und dem Betriebsbremszylinder 46 entsteht, der dann versorgt über den Vorratsbehälter 28 und die Steuerleitung 38 zum Abbremsen mit dem Betriebsbremszylinder 46 des Betriebsbremsteils 43 führt. Dieselbe Funktion wird beim Abkuppeln der Vorratsleitung 20 erreicht.

Bei abgekuppeltem abgestelltem Anhänger und ordnungsgemäß aufgefülltem Vorratsbehälter 28 befinden sich die Teile in der in Fig. 1 dargestellten Stellung. Es besteht ein Kurzschluss zwischen der Lösekammer 44 des Federspeicherteils 42 und dem Betriebsbremszylinder 46 des Betriebsbremsteils 43, so dass in beiden Kammern übereinstimmende Drücke herrschen. Fällt der Druck im Vorratsbehälter 28 beispielsweise durch eine schleichende Undichtigkeit ab, so verringert sich dieser Druck in gleichem Maße in dem Betriebsbremszylinder 46 wie auch in der Lösekammer 44, so dass die Betriebsbremswirkung durch die Bremswirkung des Federspeicherteils 42 fortlaufend ersetzt wird. Der Anhänger bleibt festgebremst. Durch ein manuelles Ziehen des Parkventils 49 kann die Lösekammer 44 entlüftet werden, so dass die Parkstellung des Anhängers auf jeden Fall gesichert ist.

Es ist erkennbar, dass es sich bei dem Rückschlagventil 8 um ein Weg-gesteuertes Rückschlagventil handelt. Je nach der Dimensionierung und Ausbildung der Teile zueinander führt ein Hub des Schaltkolbens 4 unmittelbar und unverzüglich zum Öffnen des Rückschlagventils und damit zu der Herbeiführung des beschriebenen Kurzschlusses. Es ist nicht erforderlich, dass der Druck im Vorratsbehälter 28 erst eine gewisse Druckschwelle unterschreiten muss, bevor das Rückschlagventil 8 in die Offenstellung übergeht.

Das Rangierventil 21 kann in bekannter Weise zum Rangieren des Anhängers eingesetzt werden.

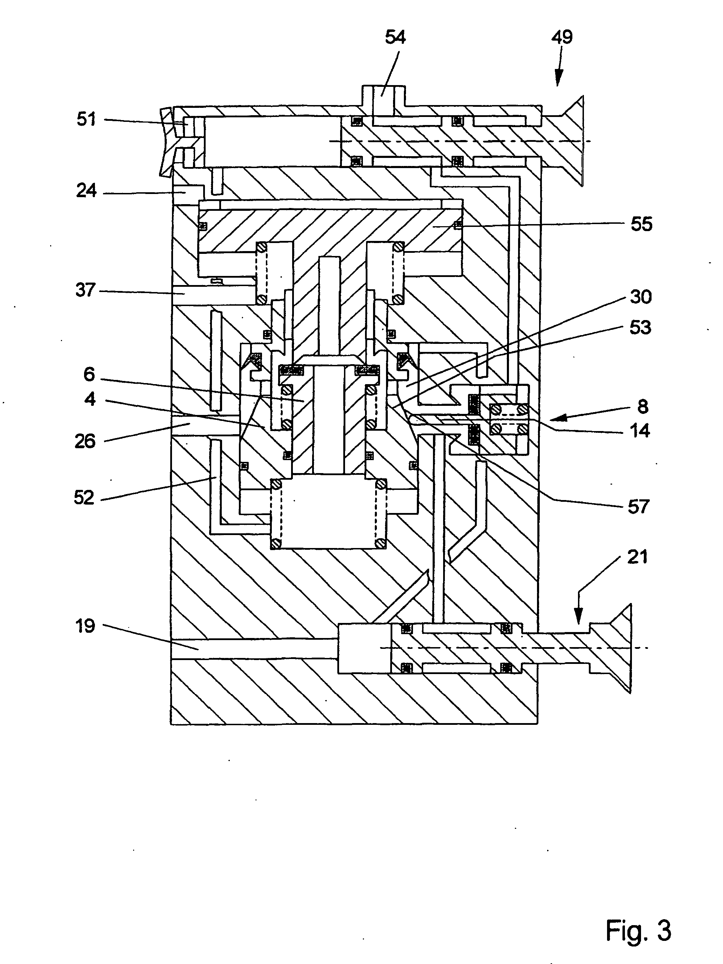

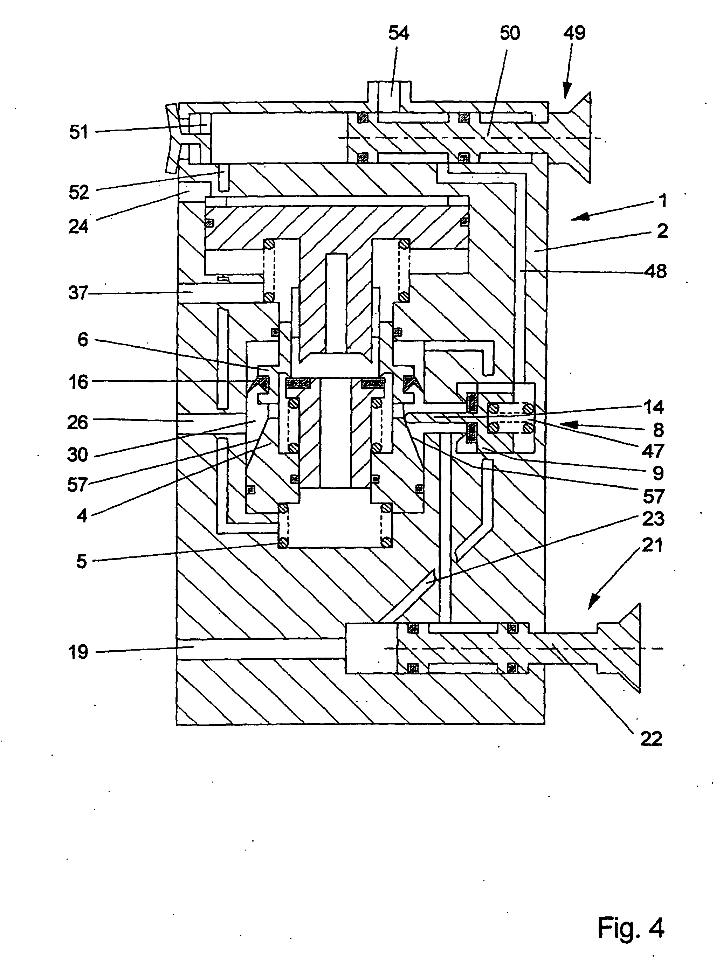

Die Ausführungsform des Anhängerbremsventils gemäß den Fig. 3 und 4 ist in weiten Bereichen ähnlich aufgebaut wie die Ausführungsform der Fig. 1 und 2, weshalb hierauf verwiesen werden kann. Das Rückschlagventil 8 besitzt hier einen in Richtung der Achse 13 geradlinig geführten Ventilkörper 9, ist also nicht als Kippventil ausgebildet. Anstelle des Anschlags 15 ist am Schaltkolben 4 eine Schrägfläche 53 gebildet, die mit dem Fortsatz 14 des Rückschlagventils 8 zusammenarbeitet. Von dem Ausgangsanschluss 54 führt ein Teil der Löseleitung 48 zu der Lösekammer 44. Dem Schaltkolben 4 ist hier ein Relaiskolben 55 zugeordnet, so dass die Notbremseinrichtung 3 in Relaisbauart verwirklicht ist. Diese Bauart ist bekannt und bedarf keiner weiteren Erläuterung. Die Funktion dieser Ausführungsform ist für den Fachmann überschaubar. Es ergeben sich die gleichen Vorteile wie bei der Ausführungsform der Fig. 1 und 2, mit Ausnahme des vorteilhaften Auffüllens des Vorratsbehälters des Anhängers und des Festbremsens beim alleinigen Ankuppeln der Bremsleitung. Die Festbremswirkung ist von dem verbliebenen Druckniveau im Vorratsbehälter auf dem Anhänger abhängig.

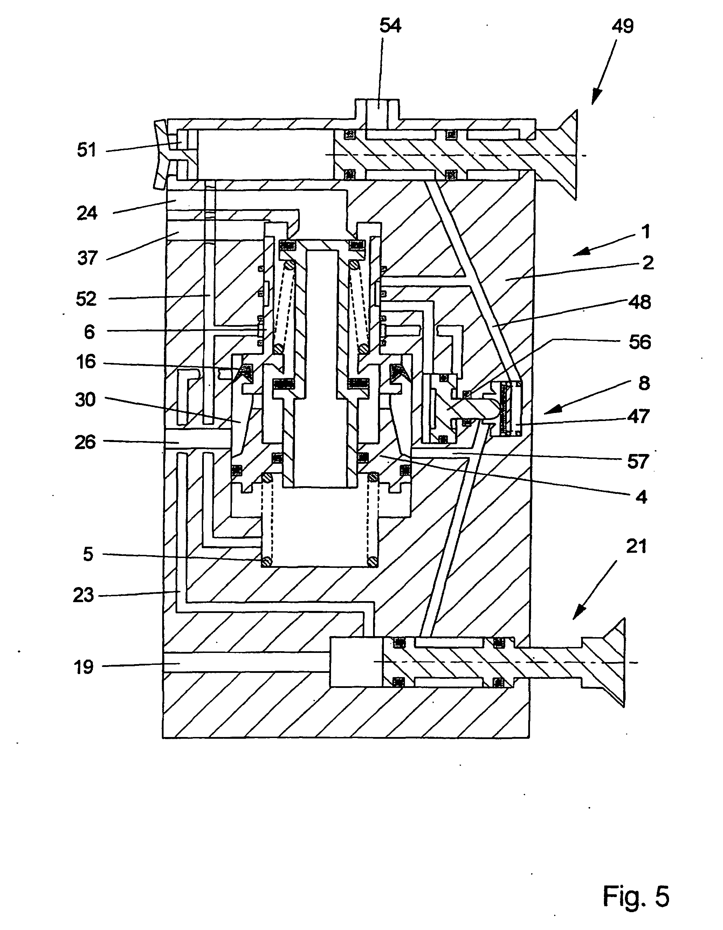

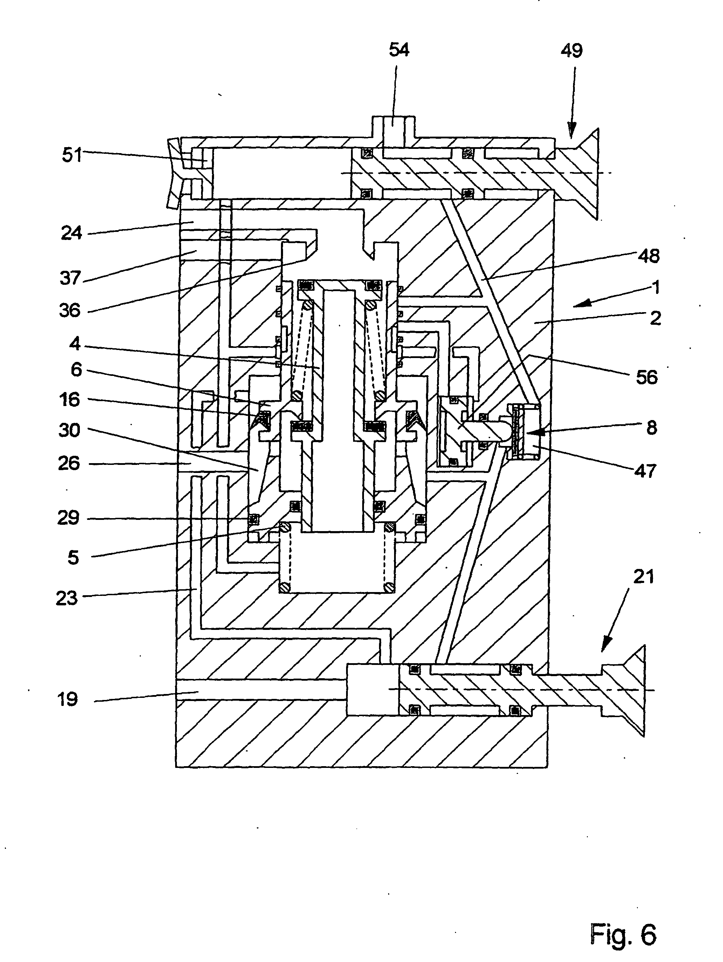

In den Fig. 5 und 6 ist schließlich eine dritte Ausführungsform dargestellt, bei der das das Umschalten des Weg-gesteuerten Rückschlagventils 8 bewirkende Signal ebenfalls von dem Weg bzw. Hub des Schaltkolbens 4 abgeleitet wird. Die Übertragung dieses Signals geschieht jedoch auf pneumatischem Wege durch Beaufschlagung eines Betätigungskolbens 56 mit Druckluft, die der Löseleitung 48 entnommen wird. Fig. 5 zeigt wiederum die geöffnete Stellung des Rückschlagventils 8 oder auch die Relativlage der Teile bei drucklosem abgekuppeltem Anhänger. Fig. 6 zeigt die Relativlage der Teile während der Fahrt.

Bei allen Ausführungsformen öffnet das Rückschlagventil 8 und stellt über einen Verbindungskanal 57 in geöffnetem Zustand des Rückschlagventils 8 die Verbindung zwischen der Vorratskammer 30 und dem Federraum 47 her. Auch hier wirkt sich die Einhaltung der Reihenfolge beim pneumatischen Ankuppeln und Abkuppeln des Anhängers positiv aus.

### BEZUGSZEICHENLISTE

- 1: Anhängerbremsventil
- 2: Gehäuse
- 3: Notbremseinrichtung
- 4: Schaltkolben
- 5: Feder
- 6: Doppelventilkörper
- 7: Achse
- 8: Rückschlagventil
- 9: Ventilkörper
- 10: Schließfeder

- 11: Rand
- 12: Kippventil
- 13: Achse
- 14: Fortsatz
- 15: Anschlag
- 16: Überströmmanschette
- 17: Anschlag
- 18: Anschlag
- 19: Eingangsanschluss
- 20: Vorratsleitung

- 21: Rangierventil
- 22: Schieber
- 23: Leitung
- 24: Eingangsanschluss
- 25: Bremsleitung
- 26: Anschluss
- 27: Leitung
- 28: Vorratsbehälter
- 29: Dichtung
- 30: Vorratskammer

- 31: Durchbrechung
- 32: Ventilplatte
- 33: Rand
- 34: Bremskammer
- 35: Dichtelement
- 36: Rand
- 37: Ausgangsanschluss
- 38: Steuerleitung
- 39: Relaisventil
- 40: Kombizylinder

- 41: Leitung
- 42: Federspeicherteil
- 43: Betriebsbremsteil
- 44: Lösekammer
- 45: Speicherfeder
- 46: Betriebsbremszylinder
- 47: Federraum
- 48: Löseleitung
- 49: Parkventil

- 50: Schieber
- 51: Entlüftungsanschluss
- 52: Entlüftungsleitung
- 53: Schrägfläche
- 54: Ausgangsanschluss
- 55: Relaiskolben
- 56: Betätigungskolben
- 57: Verbindungskanal

## Patentansprüche

1. Anhängerbremsventil mit einem Gehäuse (2), das einen Eingangsanschluss (19) für eine Vorratsleitung (20), einen Eingangsanschluss (24) für eine Bremsleitung (25), einen Anschluss (26) für einen Vorratsbehälter (28), einen Ausgangsanschluss (37) für einen Bremssteuerdruck für Betriebsbremszylinder (46) und einen Ausgangsanschluss (54) für eine zu Federspeicherbremszylindern führende Löseleitung (48) aufweist, mit einer Notbremseinrichtung (3), die eine Kolbenanordnung mit einem vom Druck im Vorratsbehälter (28) beaufschlagten Schaltkolben (4) und ein der Löseleitung (48) zu den Federspeicherbremszylindern zugeordnetes Rückschlagventil aufweist und die bei druckloser Vorratsleitung (20) den Vorratsbehälter (28) mit dem Ausgangsanschluss (37) für den Bremssteuerdruck verbindet, **dadurch gekennzeichnet, dass** das Rückschlagventil als Weg-gesteuertes Rückschlagventil (8) ausgebildet ist.

2. Anhängerbremsventil nach Anspruch 1, **dadurch gekennzeichnet, dass** das Weg-gesteuerte Rückschlagventil (8) in der Löseleitung (48) einen auf einer Schließfeder (10) in Schließrichtung abgestützten Ventilkörper (9) aufweist, der mit dem Schaltkolben (4) in der Weise zusammenarbeitet, dass der Ventilkörper (9) des Rückschlagventils (8) durch Entlüftung der Vorratsleitung (20) durch direkten mechanischen Kontakt mit dem Schaltkolben (4) in die Offenstellung überführt wird.

3. Anhängerbremsventil nach Anspruch 1 oder 2, **dadurch gekennzeichnet, dass** der Schaltkolben (4) mit seiner Achse (7) und der Ventilkörper (9) des Rückschlagventils (8) mit seiner Achse (13) im rechten Winkel zueinander angeordnet sind.

4. Anhängerbremsventil nach mindestens einem der Ansprüche 1 bis 3, **dadurch gekennzeichnet, dass** der Ventilkörper (9) des Weg-gesteuerten Rückschlagventils (8) einen sich axial erstreckenden Fortsatz (14) aufweist, der in den Weg des Schaltkolbens (4) einragt.

5. Anhängerbremsventil nach mindestens einem der Ansprüche 1 bis 4, **dadurch gekennzeichnet, dass** zum gesteuertem Öffnen des Weg-gesteuerten Rückschlagventils (8) am Schaltkolben (4) eine Schrägfläche (53) oder ein axial wirkender Anschlag (15) vorgesehen ist.

6. Anhängerbremsventil nach mindestens einem der Ansprüche 1 bis 5, **dadurch gekennzeichnet, dass** der Ventilkörper (9) des Weg-gesteuerten Rückschlagventils (8) axial geführt ist.

7. Anhängerbremsventil nach mindestens einem der Ansprüche 1 bis 5, **dadurch gekennzeichnet, dass** das Weg-gesteuerte Rückschlagventil (8) als Kippventil (12) ausgebildet ist.

8. Anhängerbremsventil nach mindestens einem der Ansprüche 1 bis 7, **dadurch gekennzeichnet, dass** in der den Federspeicherbremszylindern zugeordneten Löseleitung (48) ein manuell betätigbares Parkventil (49) vorgesehen ist.

9. Anhängerbremsventil nach mindestens einem der Ansprüche 1 bis 8, **dadurch gekennzeichnet, dass** in dem Schaltkolben (4) ein Doppelventilkörper (6) federnd aufgehängt ist.

10. Anhängerbremsventil nach mindestens einem der Ansprüche 1 bis 9, **dadurch gekennzeichnet, dass** in der zu dem Schaltkolben (4) führenden Vorratsleitung (20, 23) ein manuell betätigbares Rangierventil (21) vorgesehen ist.

## Claims

1. Trailer brake valve including a housing (2) having an inlet connection (19) for a emergency line (20), an inlet connection (24) for a service line (25), a connection (26) for a reservoir (28), an exit connection (37) for a brake control pressure to service brake cylinders (46) and an exit connection (54) for a release conduit (48) leading to spring-type brake cylinders, and including an emergency brake unit (3) comprising a piston arrangement of a control piston (4) biased with the pressurised air of a reservoir (28) and a check valve assigned to the release conduit (48) to spring-type brake cylinders, the emergency brake unit connecting the reservoir (28) with the exit connection (37) of the brake control pressure, **characterized in that** the check valve is designed to be a check valve (8) to be opened in response to a stroke.

2. Trailer brake valve of claim 1, **characterized in that** the check valve (8) to be opened in response to a stroke includes a valve body (9) arranged in the release conduit (48) and supported on a closing spring (10) acting in closing direction, the valve body cooperating with the control piston (4) in a manner to bring the valve body in the open position by a direct mechanical contact of the control piston (4).

3. Trailer brake valve of claim 1 or 2, **characterized in that** the control piston (4) with its axis (7) is arranged perpendicular to the axis (13) of the valve body (9) of the check valve (8).

4. Trailer brake valve of at least one of the claims 1 to 3, **characterized in that** the valve body (9) of the check valve (8) to be opened in response to a stroke includes an axially protruding rod (14) extending in the stroke of the control piston (4).

5. Trailer brake valve of at least one of the claims 1 to 4, **characterized in that** an inclined surface (53) or an axially actuating shoulder (15) is arranged on the control piston (4) to open the check valve (8) to be opened in response to a stroke in controlled manner.

6. Trailer brake valve of at least one of the claims 1 to 5, **characterized in that** the valve body (9) of the check valve (8) to be opened in response to a stroke is guided in axial direction.

7. Trailer brake valve of at least one of the claims 1 to 5, **characterized in that** the check valve (8) to be opened in response to a stroke is designed to be a tilting valve (12).

8. Trailer brake valve of at least one of the claims 1 to 7, **characterized in that** a manually operated parking valve (49) is arranged in the release conduit (48) assigned to the spring-type brake cylinders.

9. Trailer brake valve of at least one of the claims 1 to 8, **characterized in that** a double valve body (6) being supported on a spring is suspended in the control piston 4.

10. Trailer brake valve of at least one of the claims 1 to 9, **characterized in that** a manually operated shunting valve (21) is arranged in the emergency line (20, 23) to the control piston (4).

## Revendications

1. Clapet de frein pour véhicule remorqué comportant un boîtier (2) qui comporte un raccord d'admission (19) pour une conduite d'alimentation (20), un raccord d'admission (24) pour une conduite du frein (25), un raccord (26) pour un réservoir (28), un raccord de sortie (37) pour une pression de commande de freinage pour le cylindre de frein de service (46) et un raccord de sortie (54) pour une conduite de desserrage (48) menant vers les cylindres de frein à ressort accumulateur, un dispositif de frein de secours (3), qui comporte un dispositif à piston avec un piston de commande (4) sollicité par la pression dans le réservoir (28) et une soupape de retenue associée à la conduite de desserrage (48) menant vers les cylindres de frein à ressort accumulateur, et qui, lorsque la conduite d'alimentation (20) n'est plus sous pression, relie le réservoir (28) avec le raccord de sortie (37) pour la pression de commande de freinage, **caractérisé en ce que** la soupape de retenue est conçue sous forme de soupape de retenue (8) à commande proportionnelle à la course.

2. Clapet de frein pour véhicule remorqué selon la revendication 1, **caractérisé en ce que** la soupape de retenue (8) à commande proportionnelle dans la conduite de desserrage (48) comporte un corps de soupape (9), qui est en appui sur un ressort de fermeture (10) dans la direction de fermeture et qui coopère avec le piston de commande (4) de telle sorte que le corps de soupape (9) de la soupape de retenue (8) est amené dans la position d'ouverture sous l'effet de la ventilation de la conduite d'alimentation (20) par l'intermédiaire d'un contact mécanique direct avec le piston de commande (4).

3. Clapet de frein pour véhicule remorqué selon la revendication 1 ou 2, **caractérisé en ce que** le piston de commande (4) avec son axe (7) et le corps de soupape (9) de la soupape de retenue (8) avec son axe (13) sont agencés en angle droit l'un par rapport à l'autre.

4. Clapet de frein pour véhicule remorqué selon l'une quelconque des revendications 1 à 3, **caractérisé en ce que** le corps de soupape (9) de la soupape de retenue (8) à commande proportionnelle comporte une queue (14) orientée dans le sens axial et s'engageant dans la trajectoire du piston de commande (4).

5. Clapet de frein pour véhicule remorqué selon l'une quelconque des revendications 1 à 4, **caractérisé en ce que**, pour l'ouverture de la soupape de retenue (8) à commande proportionnelle, il est prévu sur le piston de commande (4) une rampe (53) ou une butée (15) agissant dans le sens axial.

6. Clapet de frein pour véhicule remorqué selon l'une quelconque des revendications 1 à 5, **caractérisé en ce que** le corps de soupape (9) de la soupape de retenue (8) à commande proportionnelle est guidé dans le sens axial.

7. Clapet de frein pour véhicule remorqué selon l'une quelconque des revendications 1 à 5, **caractérisé en ce que** la soupape de retenue (8) à commande proportionnelle est conçue sous forme de soupape à bascule (12).

8. Clapet de frein pour véhicule remorqué selon l'une quelconque des revendications 1 à 7, **caractérisé en ce qu'**une valve de commande du frein de stationnement (49), apte à être manoeuvrée manuellement, est prévue dans la conduite de desserrage (48) associée aux cylindres de frein à ressort accumulateur.

9. Clapet de frein pour véhicule remorqué selon l'une quelconque des revendications 1 à 8, **caractérisé en ce qu'**un corps à double soupape (6) est élastiquement suspendu dans le piston de commande (4).

10. Clapet de frein pour véhicule remorqué selon l'une quelconque des revendications 1 à 9, **caractérisé en ce qu'**une valve de commande du frein de manoeuvre (21), apte à être actionnée manuellement, est prévue dans la conduite d'alimentation (20, 23) menant vers le piston de commande (4).
